# FASCICULE DE BREVET EUROPEEN

(11) **EP 1 402 371 B1**
(45) Date de publication et mention de la délivrance du brevet: **06.10.2004**
(21) Numéro de dépôt: 01951767.1
(22) Date de dépôt: 04.07.2001
(51) Int. Cl.: G06F 11/34

(54) **PROCEDE ET SYSTEME D'EXPORTATION DE DONNEES ASSOCIEES A DES ENTITES GEOMETRIQUES BIDIMENSIONNELLES OU TRIDIMENSIONNELLES**
VERFAHREN UND SYSTEM FÜR DIE AUSFUHR VON DATENVERBÄNDEN ZU ZWEIDIMENSIONALEN ODER DREIDIMENSIONALEN GEOMETRISCHEN ENTITÄTEN
METHOD AND SYSTEM FOR TRANSMISSION OF DATA FOR TWO- OR THREE-DIMENSIONAL GEOMETRICAL ENTITIES

(43) Date de publication de la demande: 31.03.2004
(73) Titulaire: OKYZ, 75002 Paris (FR)
(72) Inventeur: LE MASNE, Francois, F-75015 Paris (FR)
(74) Mandataire: Laget, Jean-Loup
(86) Numéro de dépôt international: PCT/FR2001/002136
(87) Numéro de publication internationale: WO 2003/005201

(56) Documents cités:
- EP-A- 0 822 499
- MOHR A ET AL: "Non-invasive, interactive, stylized rendering" PROCEEDINGS OF THE SYMPOSIUM ON INTERACTIVE 3D GRAPHICS 2001, 19 - 21 mars 2001, pages 175-178, XP002196093 RESEARCH TRIANGLE PARK, NC, UNITED STATES
- KEMPF R, HARTMAN J: "OpenGL on Silicon Graphics Systems" SGI TECHNICAL PUBLICATIONS, [en ligne] no. 007-2392-002, 15 juin 1998 (1998-06-15), pages i,ii,269-303, XP002196094 Extrait de l'Internet: <URL:http://techpubs.sgi.com/library/manua ls/2000/007-2392-002/pdf/007-2392-002.pdf> [extrait le 2002-04-15]
- WALDERS H: "glAnalyze - The Newest OpenGL Product" 3DSITE NEWSLETTER, [en ligne] no. 10, 29 avril 1999 (1999-04-29), XP002196095 Extrait de l'Internet: <URL:http://www.3dsite.com/n/sites/3dsite/ newsletter/issues/10/sec12.html> [extrait le 2002-04-15]

## Description

La présente invention concerne de façon générale l'exportation de données informatiques, et plus particulièrement l'exportation de données associées à des entités géométriques depuis un programme informatique tel qu'un logiciel de conception assistée par ordinateur (CAO) ou un jeu vidéo.

La technique et les systèmes de modélisation et/ou de manipulation d'entités géométriques telles que la CAO et les jeux vidéo sont maintenant très répandus dans tous les domaines de l'industrie, depuis la conception assistée par ordinateur de produits tels que des véhicules automobiles ou des aéronefs, jusqu'à des jeux d'action en réalité virtuelle 3D, en passant par des programmes de simulation tels que des simulateurs de vol.

En particulier, bien que la technique de la CAO soit relativement jeune, moins d'une vingtaine d'années, la nécessité d'une compatibilité ascendante avec les systèmes de CAO antérieurs a amené la conservation de structures de données historiques n'exploitant que très partiellement les possibilités offertes par les systèmes informatiques modernes, en dépit de l'évolution rapide des technologies de l'information.

Par ailleurs, que ce soit dans le domaine de la CAO ou des jeux vidéo, le format de ces structures de données employées est universellement propriétaire, c'est-à-dire qu'il est à propre au logiciel concerné ou, au minimum, à l'éditeur du logiciel concerné. Cependant, au moins dans le domaine de la CAO, ces logiciels graphiques présentent en général des fonctionnalités pour importer divers formats de données associées à des entités géométriques.

Par contre, pour des raisons évidentes de conservation de clientèle, les éditeurs de ces logiciels, quels qu'ils soient, sont très peu enclins à publier les spécifications des formats de données qu'ils utilisent, et dans le même ordre d'idée, ils sont généralement assez réticents à proposer des utilitaires permettant d'exporter la totalité des données depuis leurs logiciels vers un logiciel concurrent.

Cet état de fait a pour conséquence qu'il est très difficile de transférer de façon complète les données utilisées par ces logiciels, d'un système informatique de modélisation et/ou de manipulation de données géométriques vers un système informatique similaire. Toutefois, ce transfert est rendu fréquemment nécessaire, par exemple, pour transférer des données entre des systèmes de CAO hétérogènes, tels qu'il s'en rencontre chez des sous-traitants différents d'un même donneur d'ordre, voir à l'intérieur d'une même entreprise, comme cela se produit en particulier pour des raisons généralement historiques dans les grandes entreprises utilisant depuis longtemps la CAO.

De même, on peut prévoir que l'évolution de la technique des jeux vidéo permette, à terme, d'importer des personnages ou des objets dans un jeu vidéo, ce qui soulèvera alors à nouveau le problème de l'exportation de ce type d'entité depuis un autre jeu vidéo.

Cette nécessité de transfert de données entre systèmes hétérogènes de modélisation et/ou de manipulation de données associées à des entités géométriques a pour conséquence des coûts de développement très importants dans des utilitaires de conversion de ces données, du fait de l'absence de spécifications précises concernant le format des bases de données concernées, et également, que ces utilitaires doivent être réécrits en tout ou partie lors d'améliorations ou de modifications apportées à la structure des bases de données des systèmes concernés. En outre, cette conversion est généralement incomplète, du fait de l'absence de spécifications précises concernant le format des données à convertir.

Par ailleurs, il existe un besoin, dans les entreprises utilisatrices de systèmes de CAO, pour une structure et un format de données ouverts, répandus et bien définis, à la fois comme moyen d'échange entre systèmes de CAO différents, mais aussi pour assurer une indépendance minimale vis à vis des éditeurs des logiciels de CAO qu'elle emploie, de façon à permettre la reprise des données de CAO d'un logiciel dans un autre dans l'hypothèse d'une cessation d'activité de l'éditeur du logiciel de CAO utilisé.

Compte tenu de qui précède, il est clair qu'il existe un besoin pour un procédé et un système permettant, à bon marché et de façon fiable, l'exportation de données associées à des entités géométriques depuis un quelconque logiciel de modélisation et/ou de manipulation de données associées à des entités géométriques, sans aucune connaissance des structures de données utilisées par ce logiciel, sans aucune modification de ce logiciel de quelque façon que ce soit, et sans développement d'une interface spécifique au logiciel concerné.

Il existe dans la technique antérieure des utilitaires tels que glTrace ou glAnalysePro, permettant d'intercepter et de stocker les appels de fonctions ou de primitives graphiques effectués par une application graphique. Toutefois, ces utilitaires n'ont pour fonction que de déboguer l'application graphique concernée, et en aucune façon de permettre l'exportation de données associées à des entités géométriques vers d'autres systèmes de même nature.

La présente invention a donc pour objet de proposer un procédé d'exportation de données associées à des entités géométriques utilisant un système informatique de modélisation et/ou de manipulation d'entités géométriques, ledit système informatique de modélisation et/ou de manipulation d'entités géométriques comportant au moins une unité centrale de traitement pouvant exécuter des programmes informatiques, une mémoire pouvant stocker lesdits programmes informatiques et des données associées à des entités géométriques pendant la durée de l'exécution desdits programmes informatiques, et au moins une unité de stockage pouvant stocker de façon permanente des données associées à des entités géométriques, ledit système informatique comportant au moins un programme de modélisation et/ou de manipulation d'entités géométriques et au moins un programme d'affichage de données associées à des entités géométriques, ledit au moins un programme de modélisation et/ou de manipulation transmettant les données associées à des entités géométriques à afficher au dit au moins un programme d'affichage en appelant des fonctions d'affichage situées dans ledit au moins un programme d'affichage, lesdites données à afficher par ledit programme d'affichage étant transmises par ledit au moins un programme de modélisation et/ou de manipulation au dit au moins un programme d'affichage sous la forme de paramètres d'appel desdites fonctions d'affichage appelées par ledit au moins un programme de modélisation et/ou de manipulation d'entités géométriques, lesdites fonctions d'affichage permettant l'affichage d'un certain nombre de données associées à des entités géométriques, et qui a pour caractéristique le fait qu'un programme d'exportation de données associées à des entités géométriques est substitué à au moins un desdits au moins un programmes d'affichage, ledit programme d'exportation présentant les mêmes fonctions d'affichage de données associées à des entités géométriques que ledit au moins un programme d'affichage, lesdites fonctions d'affichage de données associées à des entités géométriques dudit programme d'exportation présentant les mêmes paramètres que les fonctions correspondantes dudit au moins un programme d'affichage, ledit au moins un programme de modélisation et/ou de manipulation d'entités géométriques appelant de façon transparente les fonctions dudit programme d'exportation au lieu des fonctions correspondantes dudit au moins un programme d'affichage.

Dans le procédé de l'invention, un au moins desdits au moins un programme de modélisation et/ou de manipulation peut être, par exemple, un programme de type conception assistée par ordinateur ou CAO, ou encore, un programme de type jeu vidéo.

Par ailleurs, lors d'un appel dudit au moins un programme de modélisation et/ou de manipulation à l'une desdites fonctions d'affichages dudit programme d'exportation, ledit programme d'exportation peut stocker sous un format approprié dans ladite au moins une unité de stockage des données provenant d'un traitement par ledit programme d'exportation des appels dudit au moins un programme de modélisation et/ou de manipulation aux dites fonctions d'affichage dudit programme d'exportation.

En outre, lors d'un appel dudit au moins un programme de modélisation et/ou de manipulation à l'une desdites fonctions d'affichages dudit programme d'exportation, ledit programme d'exportation peut appeler la fonction d'affichage dudit programme d'affichage correspondant à ladite fonction d'affichage appelée dans ledit programme d'exportation avec les mêmes paramètres d'appel que ceux présents dans l'appel à ladite fonction dudit programme d'exportation.

Dans ce cas, ledit programme d'affichage appelé peut être ledit programme d'affichage auquel ledit programme d'exportation a été substitué, ou au contraire, un programme d'affichage différent de celui auquel ledit programme d'exportation a été substitué.

De plus, ledit système informatique peut comporter en outre au moins un dispositif d'affichage graphique, ledit au moins un dispositif d'affichage comportant au moins une mémoire de rafraîchissement et/ou d'affichage, ledit au moins un programme d'affichage commandant au dit au moins un dispositif d'affichage la numérisation sous forme de points desdits appels de fonctions d'affichage reçus par ledit programme d'affichage, ledit dispositif d'affichage stockant dans ladite mémoire de rafraîchissement et/ou d'affichage lesdits points provenant de ladite numérisation desdits appels de fonctions d'affichage reçus par ledit au moins un programme d'affichage.

Dans ce cas, ledit système informatique peut comporter en outre au moins un écran graphique et dans lequel ladite mémoire de rafraîchissement et/ou d'affichage est relue par ledit au moins un dispositif d'affichage, ledit au moins un dispositif d'affichage affichant sur ledit au moins un écran graphique lesdits points relus depuis ladite mémoire de rafraîchissement et/ou d'affichage.

Ladite exportation de données par ledit programme d'exportation peut alors être déclenchée par au moins une instruction graphique particulière transmise par ledit au moins un programme de modélisation et/ou de manipulation au dit programme d'exportation, ladite au moins une instruction graphique particulière déclenchant ladite exportation de données étant, par exemple, une instruction provoquant l'achèvement de ladite numérisation desdits appels de fonctions graphiques reçus en lesdits points dans ladite mémoire de rafraîchissement et/ou d'affichage.

En variante, ledit au moins un dispositif d'affichage comporter au moins deux mémoires de rafraîchissement et/ou d'affichage, et dans lequel ladite instruction provoquant ladite exportation peut être alors une instruction provoquant le basculement d'une desdites au moins deux mémoires de rafraîchissement et/ou d'affichage vers une autre desdites au moins deux mémoires de rafraîchissement et/ou d'affichage.

Par ailleurs, lors d'un appel dudit programme de modélisation et/ou de manipulation à l'une desdites fonctions d'affichages dudit programme d'exportation, ledit programme d'exportation peut stocker dans ladite mémoire, sous un format approprié, des données provenant d'un traitement par ledit programme d'exportation des appels aux dites fonctions d'affichage dudit programme d'exportation. Dans ce cas, ledit système informatique peut exécuter en outre un programme utilitaire relisant dans ladite mémoire lesdites données provenant d'un traitement par ledit programme d'exportation. De plus, ledit programme utilitaire relisant ladite mémoire peut alors stocker sous un format approprié dans ladite au moins une unité de stockage lesdites données provenant d'un traitement par ledit programme d'exportation relues depuis ladite mémoire.

De plus, ledit programme utilitaire peut en outre afficher lesdites données relues depuis ladite mémoire à l'aide d'appels appropriés aux fonctions d'affichage dudit au moins un programme d' affichage.

L'un desdits au moins un programmes d'affichage auquel est substitué ledit programme d'exportation pourra être, par exemple, conforme à la spécification OpenGL de Silicon Graphics Inc. Dans ce cas, ladite au moins une instruction provoquant ladite exportation pourra être l'instruction OpenGL "wglSwapBuffers" et/ou l'instruction OpenGL "glFlush".

De même, l'un desdits au moins un programmes d'affichage auquel est substitué ledit programme d'exportation pourra être aussi conforme à la spécification DirectX de Microsoft.

Habituellement, dans le procédé de l'invention, lesdites données associées à des entités géométriques comporteront des données géométriques. Dans ce cas, lesdites données géométriques pourront être de type bidimensionnel et/ou tridimensionnel. En outre, lesdites données géométriques pourront alors comporter des données de points, et/ou des données de segments à deux points, et/ou des données concernant des triangles, et/ou des données concernant des quadrangles, et/ou des données concernant des polygones.

De même, lesdites données géométriques pourront être associées à des entités géométriques de type filaire et/ou de type surfacique et/ou de type volumique. Lesdites données géométriques associées à des entités géométriques pourront alors comporter en outre des données géométriques associées à au moins un vecteur normal à au moins une desdites entités de type filaire et/ou de type surfacique et/ou de type volumique.

De même, lesdites données associées à des entités géométriques pourront comporter des données de couleur et/ou des données de texture.

L'invention propose également un système d'exportation de données associées à des entités géométriques utilisant un système informatique de modélisation et/ou de manipulation d'entités géométriques, ledit système informatique de modélisation et/ou de manipulation d'entités géométriques comportant au moins une unité centrale de traitement pouvant exécuter des programmes informatiques, une mémoire pouvant stocker lesdits programmes informatiques et des données associées à des entités géométriques pendant la durée de l'exécution desdits programmes informatiques, et au moins une unité de stockage pouvant stocker de façon permanente des données associées à des entités géométriques, ledit système informatique comportant au moins un programme de modélisation et/ou de manipulation d'entités géométriques et au moins un programme d'affichage de données associées à des entités géométriques, ledit au moins un programme de modélisation et/ou de manipulation transmettant les données associées à des entités géométriques à afficher au dit au moins un programme d'affichage en appelant des fonctions d'affichage situées dans ledit au moins un programme d'affichage, lesdites données à afficher par ledit programme d'affichage étant transmises par ledit au moins un programme de modélisation et/ou de manipulation au dit au moins un programme d'affichage sous la forme de paramètres d'appel desdites fonctions d'affichage appelées par ledit au moins un programme de modélisation et/ou de manipulation d'entités géométriques, lesdites fonctions d'affichage permettant l'affichage d'un certain nombre de données associées à des entités géométriques, et qui a pour caractéristique le fait qu'il met en oeuvre le procédé selon l'une quelconque des revendications précédentes.

On va maintenant décrire, à titre d'exemple seulement, deux modes de réalisation de l'invention, en se référant aux dessins annexés, dans lesquels :
- la figure 1 est le schéma fonctionnel de l'affichage d'un modèle géométrique sur l'écran d'un ordinateur à l'aide d'une bibliothèque de fonctions d'affichage standard, sans utilisation du procédé d'exportation de l'invention ;
- la figure 2 est le schéma fonctionnel de l'affichage d'un modèle géométrique sur l'écran d'un ordinateur, en utilisant le procédé d'exportation de données associées à des entités géométriques selon l'invention ;
- la figure 3 est un organigramme du procédé d'exportation de données d'un modèle géométrique selon l'invention ;
- la figure 4 est l'organigramme détaillé du pavé 40 de la figure 3 dans un premier mode de réalisation du procédé de l'invention ;
- la figure 5 est l'organigramme détaillé du pavé 40 de la figure 3 dans un second mode de réalisation du procédé de l'invention.

Le procédé de l'invention fonctionne sur système informatique 1 de modélisation et/ou de manipulation de données associées à des entités géométriques.

Ce système informatique 1 permet la mise en oeuvre par un utilisateur 2, non représenté, d'un programme de modélisation et/ou de manipulation 11 de données associées à des entités géométriques, que le procédé de l'invention soit ou non mis en oeuvre sur le système informatique 1. Le système informatique 1 permet en outre l'affichage sur un écran graphique 14 de signaux graphiques provenant d'une carte d'interface graphique 13 pilotée par une bibliothèque de fonctions graphiques 12.

Dans la suite de cette description, le programme 11 de modélisation et/ou de manipulation 11 de données associées à des entités géométriques pourra aussi être référencé comme l'application graphique 11 pour plus de simplicité.

Dans les modes de réalisation préférés de l'invention, le système informatique 1 utilisé pour faire fonctionner le procédé de l'invention est un ordinateur mettant en oeuvre le système d'exploitation Windows de Microsoft, et dans ce système d'exploitation, le programme d'affichage de données géométriques 12 est une API (pour Advanced Programming Interface, soit Interface de Programmation Avancée) graphique implémentée via une bibliothèque d'édition de liens dynamique ou DLL (Dynamic Link Library), conforme, par exemple, à la spécification OpenGL dé la firme Silicon Graphics Inc. Cette DLL est habituellement située dans le répertoire système de Windows, et elle est dénommée "opengl32.dll".

La bibliothèque OpenGL comprenant plusieurs centaines de fonctions, l'ensemble des fonctions OpenGL utilisées à titre d'exemple dans cette description, que soit avec ou sans mise en oeuvre du procédé de l'invention, a été volontairement limité à un sous-ensemble très réduit des fonctions OpenGL pour permettre à cette description de conserver un volume raisonnable. Toutefois, il doit être bien compris dès à présent que le principe de l'invention n'est pas limité aux fonctions OpenGL présentées dans cette description, mais qu'il s'applique de même à toutes les fonctions présentes dans la spécification OpenGL.

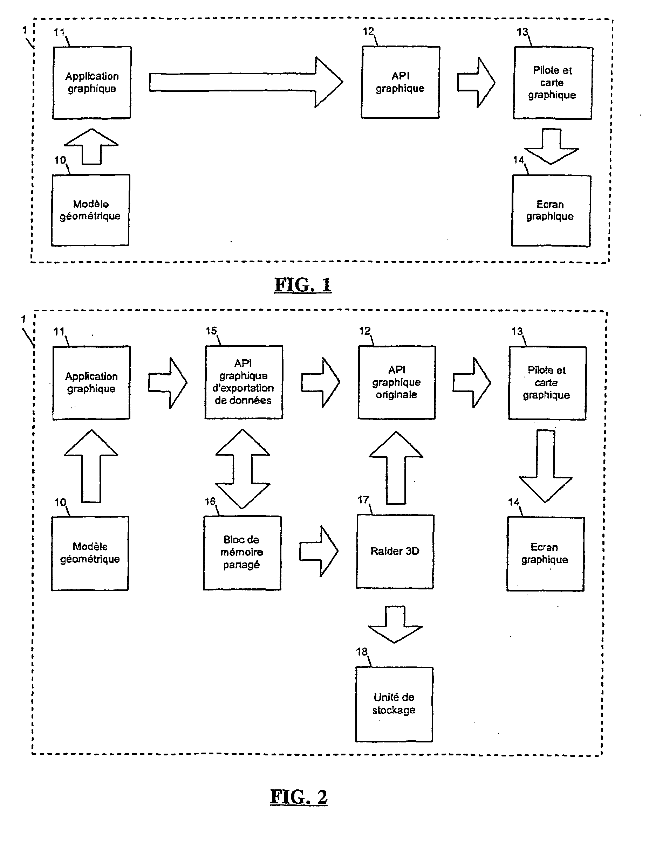

En se référant à la figure 1, on va maintenant décrire le principe de fonctionnement de l'affichage d'un modèle géométrique 10 sur l'écran graphique 14 sans utilisation du procédé d'exportation de données de l'invention.

Lorsque l'application graphique 11 souhaite afficher un modèle géométrique 10 sur l'écran graphique 14, elle fait appel à des fonctions graphiques situées dans la DLL d'interface graphique 12. Cette interface graphique 12 envoie des commandes de type vectoriel à la carte graphique 13 via son pilote logiciel associé 13.

Les écrans informatiques proprement dits étant constitués par des tubes cathodiques, ou des dispositifs similaires, effectuant l'affichage par un balayage de type vidéo, cela a pour conséquence qu'il est nécessaire de stocker une image binaire des données graphiques affichées, afin qu'une persistance visuelle des données graphiques affichées puisse être maintenue pour l'utilisateur 2. Cette image binaire, composées d'un certain nombre de bits pour chacun des points affichables de l'écran 14, est stockée dans une mémoire interne à la carte graphique 13, appelée mémoire de rafraîchissement ou mémoire de rafraîchissement. La persistance visuelle des données pour l'utilisateur 2 est obtenue par la carte graphique 13 en relisant cette image binaire plusieurs dizaines de fois par seconde, et en générant à partir des informations relues des signaux vidéo représentatifs de l'image stockée dans la mémoire de rafraîchissement de la carte graphique 13. Ces signaux vidéo sont envoyés par la carte graphique 13 à l'écran graphique 14 sur lequel ils provoquent l'affichage de l'image stockée sous forme binaire dans la mémoire de rafraîchissement de la carte graphique 13.

Une application graphique 11 souhaitant afficher un modèle géométrique 10 sur l'écran d'ordinateur 14 effectuera donc une suite d'appels aux fonctions graphiques présentes dans la DLL OpenGL 12. Dans la spécification OpenGL, cette suite d'appels de fonctions graphiques est terminée par un appel à une fonction particulière qui provoquera l'achèvement de la conversion des instructions envoyées à la carte 13 en points en points binaires affichés sur l'écran graphique 14.

Par exemple, pour afficher un modèle géométrique 10 constitué d'une bande de deux triangles T1 et T2 passant respectivement par les points ABC et BCD de coordonnées respectives :
A : (0,10,0) ;
B : (0,10,-10) ;
C (0,0,0) ;
D : (0,0,-10) ;
l'application graphique 11 effectuera les appels de fonctions graphiques suivant à la DLL OpenGL 12 :
glBegin(GL_TRIANGLE_STRIP)
glVertex3fv(0.000,10.000,0.000)
glVertex3fv(0.000,10.000,-10.000)
glVertex3fv(0.000,0.000,0.000)
glVertex3fv(0.000,0.000,-10.000)
glEnd()
wglSwapBuffers()

Dans cette suite d'appels, l'appel glBegin(GL_TRIANGLE_STRIP) indique le début d'une bande de triangles et l'appel glEnd() en indique la fin. La fonction glVertex3fv permet de définir un des sommets des triangles par ses trois coordonnées x, y et z.

Lorsque tous les éléments précédents ont été transmis par l'application graphique 11 à l'API graphique 12 via les appels de fonctions ci-dessus, l'application graphique 11 provoque l'achèvement de l'affichage des éléments précédemment transmis à l'aide d'une fonction appropriée de l'API graphique 12, telle que la fonction la fonction "glflush" ou la fonction "wglSwapBuffers", figurant dans l'exemple ci-dessus. Ces fonctions provoquent toutes deux l'achèvement de la conversion des instructions graphiques précédemment reçues en image de bits dans la mémoire de rafraîchissement courante de la carte graphique 13, ce qui a pour conséquence de terminer l'affichage des instructions reçues graphiques précédemment reçues sur l'écran graphique 14.

L'instruction "wglSwapBuffers" provoque en outre la permutation des deux mémoires de trame de la carte graphique 13 dans le cas où cette carte graphique 13 en possède deux.

Dans le cas de l'exemple d'affichage décrit, la réception l'instruction "wglSwapBuffers" a pour effet de provoquer l'affichage effectif sur l'écran graphique 14 des instructions graphiques transmises par l'application graphique 11 à la carte graphique 13 via l'interface graphique 12. En l'occurrence, cela a pour effet d'achever l'affichage du modèle géométrique 10 constitué des deux triangles T1 et T2 sur cet écran 14.

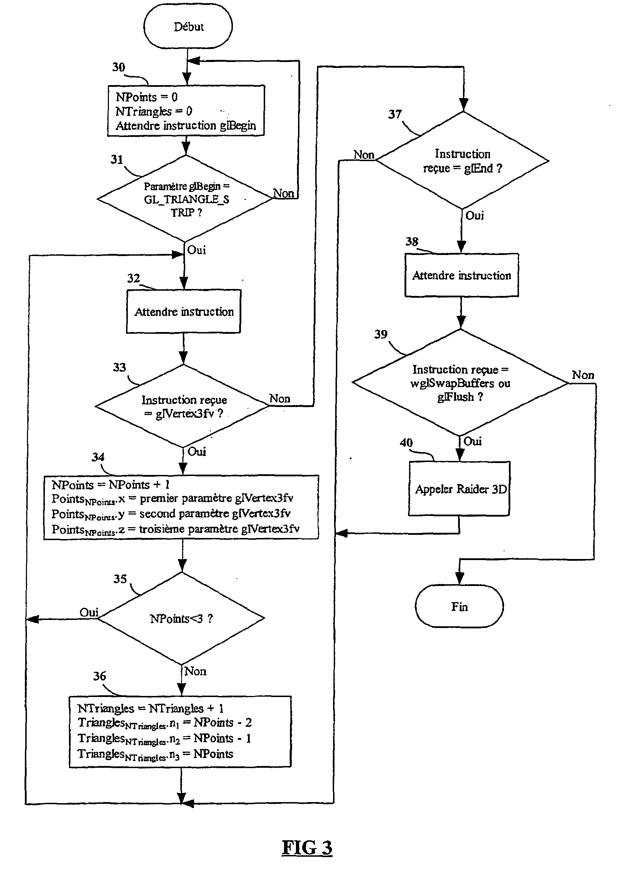

En se référant maintenant aux figures 2 et 3, on va maintenant décrire l'exportation d'un modèle géométrique mettant en oeuvre le procédé d'exportation de l'invention.

Lors de l'installation du programme d'exportation de données graphiques mettant en oeuvre le procédé de l'invention, la DLL "'openg132.dll" 12 originale présente dans le répertoire système de Windows est renommée, par exemple, en "openg132bis.dll" et elle est remplacée par une DLL 15 mettant en oeuvre le procédé de l'invention, et nommée de façon identique à l'original, à savoir "openg132.dll". Cette DLL 15 selon l'invention présente les mêmes fonctions conformes à la spécification OpenGL que la DLL originale 12, c'est-à-dire qu'elle offre les mêmes fonctions d'interface, avec les même noms et les mêmes paramètres, que la DLL OpenGL 12 originale.

Lorsqu'un opérateur 2, non représenté, souhaite exporter les données d'un modèle géométrique 10 créé et/ou manipulé par l'application graphique 11, il met en oeuvre préalablement la DLL réalisant le procédé de l'invention ainsi que décrit ci-dessus. Il fait alors afficher le modèle géométrique 10 voulu par l'application graphique 11. De façon identique à ce qui a été décrit précédemment dans le cadre de l'utilisation du système informatique 1 sans mise en oeuvre du procédé de l'invention, lorsque l'application graphique souhaite afficher un modèle géométrique sur l'écran, elle utilise la DLL 15 dénommée "openg132.dll" située dans le répertoire système de Windows, c'est-à-dire qu'elle effectue des appels aux fonctions et aux primitives conformes à la spécification OpenGL contenues dans cette DLL 15.

Compte-tenu de ce que, au moment de l'installation du programme d'exportation de données associées à des entités géométriques selon l'invention, la DLL 12 a été remplacée par la DLL 15 mettant en oeuvre le procédé de l'invention, l'application graphique appelle alors de façon transparente les fonctions et primitives présentes dans la DLL 15 mettant en oeuvre le procédé de l'invention, en lieu et place des fonctions et des primitives présentes dans la DLL 12 originale.

En variante, la DLL 15 dénommée "openg132.dll" pourra n'être installée que pour une application de modélisation ou de manipulation géométrique 11 particulière, en installant la DLL 15 uniquement dans le répertoire de l'application 11 particulière. En effet, lorsque le système d'exploitation Windows recherche une DLL 15 référencée par une application 11, il recherche tout d'abord cette DLL 15 dans le même répertoire que celui où se trouve l'application 11. A défaut, le système d'exploitation Windows recherche ensuite cette DLL 15 dans des répertoires prédéfinis du système 1, qui comprennent entre autres le répertoire système où est installé le système d'exploitation Windows.

Ainsi, lorsque le procédé de l'invention est mis en oeuvre, et en reprenant l'exemple décrit ci-dessus, la DLL 15 du procédé de l'invention reçoit, en lieu et place de la DLL OpenGL 12 originale, les appels de fonction graphiques destinés à cette dernière. Dans les modes de réalisation actuels de l'invention, la DLL 15 de l'invention transmet alors à la DLL 12 originale les appels de fonction reçus, c'est-à-dire qu'elle appelle les fonctions correspondantes de la DLL 12 avec les mêmes paramètres que ceux reçus dans les appels provenant de l'application graphique 11.

En conséquence, la DLL 15 de l'invention reçoit les appels de fonctions suivants :
glBegin(GL _TRIANGLE_STRIP)
glVertex3fv(0.000,10.000,0.000)
glVertex3fv(0.000,10.000,-10.000)
glVertex3fv(0.000,0.000,0.000)
glVertex3fv(0.000,0.000,-10.000)
glEnd()
wglSwapBuffers()

Pour exporter des données associées à des entités géométriques, le programme contenu dans la DLL 15 selon l'invention stocke et gère dans sa mémoire 16 un certain nombre de tables de données associées à des entités géométriques, telles que, de façon non limitative, une table "Points" de points et une table "Triangles" de triangles. Initialement, ces deux tables sont vides, c'est-à-dire que le nombre d'éléments NPoints de la table Points et le nombre d'éléments NTriangles de la table Triangles sont tous à zéro.

Le programme de la DLL 15 commence à l'étape 30 où il initialise le nombre NPoints de points et le nombre de triangles NTriangles à la valeur 0, puis il attend la réception d'une instruction graphique en provenance de l'application graphique 11. Lors de la réception de l'instruction glBegin(GL_TRIANGLE_STRIP), le procédé selon l'invention passe à l'étape 31 où il teste si la valeur du paramètre de l'instruction GL_BEGIN est la valeur prédéfinie GL_TRIANGLE_STRIP indiquant le début d'une suite d'instructions graphiques définissant une bande de triangles par leurs sommets. Si la réponse est négative, le procédé retourne à l'étape 30. Si la réponse à l'étape 31 est positive, c'est-à-dire si la valeur du paramètre est GL_TRIANGLE_STRIP, le procédé passe à l'étape 32 où il attend une instruction graphique.

Lors de la réception d'une instruction graphique, le procédé de l'invention teste à l'étape 33 si l'instruction reçue est une instruction glVertex3fv ; dans le cas de l'exemple présenté, la réponse est positive, et lors de la réception de l'appel glVertex3fv(0.000,10.000,0.000), le procédé de l'invention passe alors à l'étape 34. A l'étape 34, le programme 15 incrémente alors d'une unité le nombre NPoints de points reçus, c'est-à-dire qu'il passe le nombre NPoints de sa valeur initiale zéro à la valeur 1. Il stocke alors dans la table Points le point reçu, c'est-à-dire que, toujours à l'étape 34, il stocke en outre respectivement le premier, le second et le troisième paramètre de l'instruction glVertex3fv reçue, en l'occurrence les valeurs 0.000, 10.000 et 0.000, dans les emplacements des coordonnées x, y et z du premier point dans la table Points. Le procédé de l'invention passe alors à l'étape 35.

A l'étape 35, le procédé de l'invention teste si le nombre NPoints de points reçu est inférieur à 3. Si la réponse est positive, le procédé de l'invention retourne à l'étape 32, sinon le procédé de l'invention passe alors à l'étape 36.

Lorsque, à l'étape 33, la réponse est négative, cela signifie qu'au moins trois points ont été transmis par les instructions glVertex3fv précédentes. D'après la spécification OpenGL pour la bande de triangles GL_TRIANGLE_STRIP, cela indique qu'un triangle de la bande, constitué par les trois dernier points reçus, a été défini.

En conséquence, à l'étape 36, le programme de DLL 15 mettant en oeuvre le procédé de l'invention augmente donc le nombre de triangles reçus d'une unité, c'est-à-dire qu'il augmente le nombre NTriangles de triangles reçus d'une unité. Il stocke alors les numéros n₁, n₂ et n₃ des points constituant le triangle ainsi reçu, c'est-à-dire, d'après la spécification OpenGL les trois derniers points reçus, dans les emplacements correspondants de la table des triangles, c'est-à-dire, qu'il stocke les numéros NPoints-2, NPoints-1 et NPoints des trois derniers points reçus dans les emplacements n₁, n₂, et n₃ de l'emplacement de numéro NTriangles de la table Triangles.

Le programme 15 retourne alors à l'étape 32 pour y attendre d'autres points éventuels de la bande de triangles transmise par l'application graphique 11.

Le procédé de l'invention répète les étapes 32 à 36 jusqu'à ce qu'à l'étape 33, la réponse soit négative.

Dans l'exemple décrit, après avoir quatre points via les quatre instructions "glVertex3fv", la DLL 15 ne reçoit pas d'autre instruction "glVertex3fv", mais elle reçoit à la place une instruction "glEnd". En conséquence, à l'étape 33, la réponse est négative, et la DLL 15 passe alors à l'étape 37.

Dans la spécification OpenGL, l'instruction "glEnd" signifie que la suite d'instructions graphiques commencée par l'instruction glBegin précédente, en l'occurrence la bande de triangles GL_TRIANGLE_STRIP, est terminée.

A l'étape 37, la DLL 15 teste si le dernier appel de fonction reçu était un appel à la fonction "glEnd". Si la réponse est négative, alors le programme contenu dans la DLL 15 retourne à l'étape 32. Lorsque la réponse du test à l'étape 37 est positive, le programme de la DLL 15 passe à l'étape 38. Dans l'exemple décrit, cela se produit lorsque l'application graphique 11 envoie l'instruction "glEnd" après les quatre instructions "glVertex3fv".

A l'étape 38, le programme contenu dans la DLL 15 de l'invention attend une instruction en provenance de l'application graphique 11, puis, lorsqu'une telle instruction a été reçue, il passe à l'étape 39.

A l'étape 39, le programme de la DLL 15 teste si l'instruction graphique reçue est une instruction OpenGL "wglSwapBuffers" ou "glFlush". Si la réponse est négative, c'est-à-dire, si l'instruction reçue n'est ni une instruction "wglSwapBuffers", ni une instruction "glBuffers", alors le programme de la DLL 15 selon le procédé de l'invention est terminé. Si la réponse à l'étape 39 est positive, alors le programme de la DLL 15 passe l'étape 40.

Dans l'exemple décrit, après l'envoi de l'instruction "glEnd", l'application graphique 11 envoie alors l'instruction "wglSwapBuffers" au programme 15, mais l'instruction "glFlush" aurait également pu être utilisée.

Ainsi qu'indiqué précédemment dans le cadre de la mise en oeuvre du système informatique 1 sans utilisation du procédé de l'invention, ces instructions provoquent l'achèvement de la conversion des instruction graphiques et leur affichage proprement dit sur l'écran 14, et elles comportent donc implicitement la signification que les instructions précédemment transmises forment un tout cohérent, puisque qu'elles doivent être affichées sur l'écran 14 sans attendre d'autres instructions graphiques.

En conséquence, dans les modes de réalisation de l'invention, ces instructions sont utilisées pour déterminer que les instructions graphiques précédemment reçues forment un tout cohérent et pour provoquer alors leur exportation vers l'unité de stockage 18.

Par conséquent, lorsque à l'étape 39, la réponse au test est positive, c'est-à-dire, lorsqu'une instruction "wglSwapBuffers" ou "glFlush" a été reçue, les instructions précédemment reçues par le programme 15 forment un tout cohérent, et le programme 15 mettant en oeuvre le procédé de l'invention passe alors à l'étape 40 où un module 17, dénommé Raider 3D 17, effectue l'exportation, vers l'unité de stockage 18, des tables Points et Triangles stockées dans la mémoire 16.

Dans le procédé de l'invention, la mémoire 16 dans laquelle sont stockées les tables Points et Triangles est une mémoire partagée dans l'ordinateur mettant en oeuvre le procédé de l'invention, ce qui signifie qu'elle peut être écrite par la DLL 15, et relue simultanément par le module 17 Raider 3D 17.

Dans un premier mode de réalisation de l'invention, les tables Points et Triangles sont exportées vers l'unité 18 sous la forme de fichiers textes simples dans lequel les points et les triangles sont enregistrés dans des fichiers de même nom sur l'unité de stockage 18.

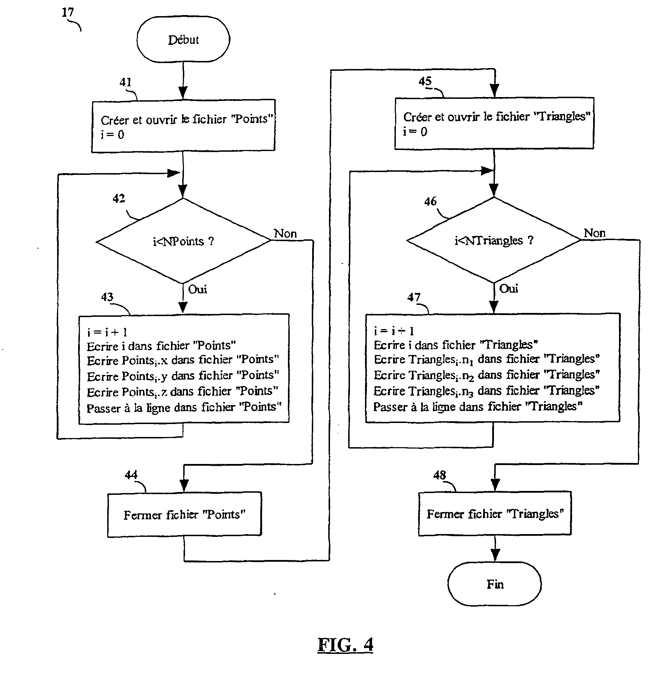

En se référant en outre à la figure 4, on va maintenant décrire le fonctionnement du module Raider 3D 17 selon un premier mode de réalisation du procédé de la présente invention.

Dans ce premier mode de réalisation, à l'étape 41, le module Raider 3D 17 crée et ouvre un fichier d'exportation de points, dénommé "Points" dans l'exemple décrit, sur l'unité de stockage 18, il initialise le nombre i de points enregistrés sur le fichier "Points" à la valeur 0, puis il passe à l'étape 42.

A l'étape 42, le module Raider 3D 17 teste si le nombre i de points enregistrés dans le fichier "Points" est inférieur au nombre de points NPoints présents dans la mémoire partagée. Si la réponse à l'étape 42 est positive, le module Raider 3D 17 passe à l'étape 43. A l'étape 43, le module Raider 3D 17 augmente d'une unité la valeur du nombre i, puis il écrit dans le fichier "Points" la nouvelle valeur du nombre i, suivie, sur la même ligne, des trois coordonnées x, y et z du point de numéro i correspondant copiées depuis l'entrée i de la table "Points" stockée dans la mémoire partagée 16. Le module Raider 3D 17 passe alors à la ligne dans le fichier "Points", puis il retourne à l'étape 42.

Si la réponse à l'étape 42 est négative, le module Raider 3D 17 passe à l'étape 44. A l'étape 44, le module Raider 3D 17 ferme le fichier "Points", puis il passe à l'étape 45. A l'étape 45, le module Raider 3D 17 crée et ouvre sur l'unité de stockage un fichier d'exportation de triangles, dénommé "Triangles" dans l'exemple décrit, puis il initialise à zéro la valeur du nombre i de triangles écrits dans le fichier "Triangles". Il passe alors à l'étape 46.

A l'étape 46, le module Raider 3D 17 teste si le nombre i de triangles enregistrés dans le fichier "Triangles" est inférieur au nombre de triangles NTriangles présents dans la mémoire partagée. Si la réponse à l'étape 46 est positive, le module Raider 3D 17 passe à l'étape 47. A l'étape 47, le module Raider 3D 17 augmente le nombre i d'une unité, puis il écrit dans le fichier "Triangles" le numéro i du triangle courant, et, sur la même ligne du fichier "Triangles", il recopie les numéros n₁, n₂ et n₃ des trois points constituant le triangle de numéro i, à partir de l'entrée i de la table "Triangles" stockée dans la mémoire partagée. Le module 17 retourne alors à l'étape 46.

Si, à l'étape 46, la réponse est négative, le module Raider passe à l'étape 48 où il ferme de fichier d'exportation "Triangles".

Les fichiers textes "Points" et "Triangles" obtenus dans le cas de l'exemple précédent auront alors la forme présentée dans les tables 1 et 2 ci-dessous respectivement.

**TABLE 1**

| | |
|---|---|
| 1 | 0.000,10.000,0.000 |
| 2 | 0.000,10.000,-10.000 |
| 3 | 0.000,0.000,0.000 |
| 4 | 0.000,0.000,-10.000 |

**TABLE 2**

| | |
|---|---|
| 1 | 1,2,3 |
| 2 | 2,3,4 |

Le procédé d'exportation de données liées à des entités de type géométriques selon le premier mode de réalisation de la présente invention est alors terminé, et ainsi qu'on vient de le voir, il aura permis d'exporter le modèle géométrique 10 créé et/ou manipulé par l'application graphique 11 sans aucune connaissance du format des données de cette application, sans aucune modification de cette application 11 et sans aucun développement de programme spécifique à cette application 11.

Dans un second mode de réalisation de l'invention, le format d'exportation utilisé est le format DXF (Data eXchange Format) de la firme AutoDesk, qui est le format de référence du marché en matière d'exportation de données associées à des entités géométriques.

Le format DXF est un format texte à raison d'une information par ligne. Les lignes sont regroupées par paires, la première ligne de la paire contenant une donnée numérique entière indiquant le type de la donnée figurant sur la ligne suivante. Ainsi, lorsque la donnée numérique de type est un entier compris entre 0 et 9, la donnée figurant sur la ligne suivante sera une chaîne de caractères, et quand la donnée numérique de type sera un entier compris entre 10 et 59, la donnée figurant sur la ligne suivante sera une coordonnée de points tridimensionnelle de type flottant double précision.

Par ailleurs, un fichier DXF est organisé en sections. Une section est introduite une paire de lignes, une ligne constituée du chiffre 0 introduisant une chaîne de caractères, et une ligne constituée du mot-clé SECTION, et elle est terminée par une paire de lignes, dont la première est constituée du chiffre 0 et la seconde du mot-clé ENDSEC.

Un fichier DXF comporte un certain nombre types de section différentes, en particulier, la section ENTITIES décrivant les entités de type géométrique, ainsi qu'un certain nombre d'autres sections, telles que des sections définissant des paramètres ou des classes, qui sortent du cadre de la présente description.

La section ENTITIES est constituée des diverses entités géométriques du modèle géométrique, chaque entité étant introduite par une chaîne de caractères indiquant le type de l'entité, suivie des paramètres nécessaires à la définition de l'entité considérée.

Par exemple, la définition d'une facette dans l'espace est introduite par une paire de lignes dont la première est constituée du chiffre 0 introduisant une chaîne de caractères, suivie d'une ligne constituée du mot-clé 3DFACE.

Une facette dans l'espace est constituée de trois ou quatre points constituant respectivement un triangle ou un quadrangle, le quatrième point étant spécifié comme identique au troisième pour indiquer, par convention, un triangle plutôt qu'un quadrangle. Chacun des quatre points d'une facette est défini par ses trois coordonnées x, y et z, et chacune des coordonnées est définie, comme précédemment indiqué, par un couple de lignes, dont la première est un indicateur entier compris entre 10 et 59, et dont la seconde est la coordonnée proprement dite.

Dans la spécification du format DXF, les indicateurs pour les coordonnées x₁, y₁ et z₁ du premier point de la facette sont. respectivement 10, 20 et 30, les indicateurs pour les coordonnées x₂, y₂ et z₂ du second point de la facette sont respectivement 11, 21 et 31, les indicateurs pour les coordonnées x₃, y₃ et z₃ du troisième point de la facette sont respectivement 12, 22 et 32 et les indicateurs pour les coordonnées x₄, y₄ et z₄ du quatrième point de la facette sont respectivement 13, 23 et 33.

En d'autres termes, pour le point de numéro j, pour j variant de 1 à 4 d'une facette, l'indicateur numérique de la coordonnée x du point j est 9+j, l'indicateur numérique de la coordonnée y du point j est 19+j et l'indicateur numérique de la coordonnée z du point j est 29+j.

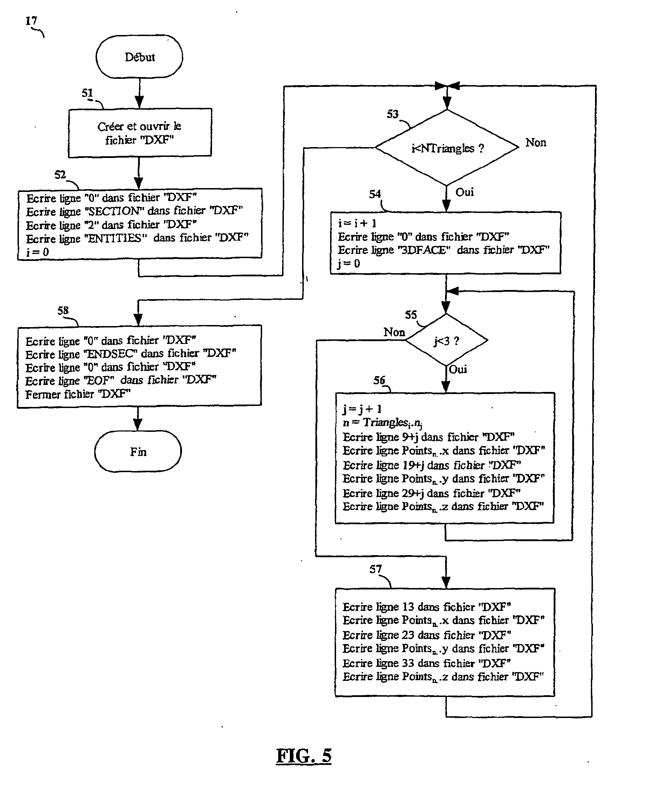

Plus précisément, en se référant maintenant à la figure 5, le module Raider 3D 17 selon le second mode de réalisation de la présente invention crée et ouvre à l'étape 51 un fichier d'exportation dénommé, dans l'exemple décrit, "DXF", puis il passe à l'étape 52. A l'étape 52, le module Raider 3D 17 écrit les lignes d'en-tête du fichier au format DXF, à savoir les quatre lignes suivantes :
0
SECTION
2
ENTITIES
Puis il initialise à 0 le nombre i de facettes écrites dans le fichier "DXF". Le module Raider 3D 17 passe alors à l'étape asse à l'étape 53. A l'étape 53, le module Raider 3D 17 teste si le nombre i de facettes écrites est inférieur au nombre de triangles stockés dans la mémoire partagée.

Si la réponse à l'étape 53 est positive, c'est-à-dire, si le nombre i de triangles précédemment écrits dans le fichier DXF est inférieur au nombre NTriangles de triangles stockés dans la mémoire partagée 16, alors le module Raider 3D 17 passe à l'étape 54. A l'étape 54, le module Raider 3D 17 incrémente d'une unité le nombre i de triangles précédemment écrits dans le fichier, puis il écrit les lignes d'entête au format DXF pour une facette, à savoir les deux lignes suivantes :
0
3DFACE

En outre, toujours à l'étape 54, le module Raider 3D 17 initialise à 0 le nombre j de points du triangle i écrits dans le fichier "DXF", puis il passe à l'étape 55. A l'étape 55, le module Raider 3D 17 teste si le nombre j de points du triangle i écrits dans le fichier "DXF" est inférieur à 3. Si la réponse est positive, le module Raider 3D 17 passe à l'étape 56.

A l'étape 56, le module Raider 3D augmente d'une unité le nombre j de points du triangle i écrits dans le fichier "DXF" et il calcule un numéro n comme étant égal à Triangles.nⱼ, c'est-à-dire que n devient égal au numéro nⱼ du point j du triangle i. Il écrit ensuite successivement l'indicateur de coordonnée x pour le point j de la facette dans le format DXF, c'est-à-dire la valeur 9+j, sur une première ligne, puis la coordonnée x elle-même sur une seconde ligne, pour le point dont le numéro n a été calculé précédemment.

De même, toujours à l'étape 56 et toujours pour le point de numéro n, le module Raider 3D 17 écrit respectivement l'indicateur 19+j sur une troisième ligne et la coordonnée y sur une quatrième ligne, puis l'indicateur 29+j sur une cinquième ligne et la coordonnée z sur une sixième ligne. Le module Raider 3D retourne alors à l'étape 55.

Le procédé des étapes 55 et 56 est répété jusqu'à ce qu'à l'étape 55, la réponse devienne négative, c'est-à-dire que le nombre j de points du triangle écrits dans le fichier "DXF" soit égal à 3. A ce point des opérations, le module Raider 3D 17 aura alors écrit les trois points du triangle i.

Lorsque i vaut 1, c'est-à-dire pour le premier triangle, le module Raider 3D 17 aura donc écrit successivement dans le fichier "DXF" les lignes suivantes :
10
0.0
20
10.0
30
0.0
pour le point n₁ = 1 du triangle 1, puis les lignes :
11
0.0
21
10.0
31
- 10.0
pour le point n₂=2 du triangle 1, puis les lignes :
12
0.0
22
0.0
32
0.0
pour le point n₃=3 du triangle 1.

Lorsque à l'étape 55, le nombre j de points écrits dans le fichier "DXF" est égal à 3, le module Raider 3D passe à l'étape 57. Au début de l'étape 57, le module Raider 3D aura donc écrit dans le fichier "DXF" les trois points du triangle i sous la forme ci-dessus indiquée. Toutefois, la spécification DXF nécessitant quatre points pour une facette, ainsi que précédemment mentionné, le troisième point de numéro n₃ est répété, ce qui signifie, de par la convention DXF, que la facette décrite est un triangle.

Pour cela, à l'étape 57, le module Raider 3D écrit dans le fichier l'indicateur de coordonnée x pour le quatrième point de la facette, soit 13, sur une première ligne, puis la coordonnée x sur une seconde ligne. De même, il écrit respectivement l'indicateur de coordonnée y, soit 23, sur une troisième ligne et la coordonnée y sur une quatrième ligne, et l'indicateur de coordonnée z, soit 33, sur une cinquième ligne et la coordonnée z sur une sixième ligne.

Dans le cas où i vaut 1, c'est-à-dire pour le premier triangle, cela se traduit par le fait qu'à l'étape 57, le module Raider 3D 17 écrit dans le fichier "DXF" les lignes suivantes :
13
0.0
23
0.0
33
0.0
qui répètent les coordonnées du point précédent de la facette courante, à savoir, le troisième point du premier triangle.

A l'issue de l'étape 57, le module Raider 3D 17 retourne alors à l'étape 54 pour exporter le triangle suivant, en utilisant le même procédé que celui décrit ci-dessus pour le premier triangle, jusqu'à ce que, à l'étape 54 la réponse soit positive.

Lorsque à l'étape 54, la réponse est positive, c'est-à-dire que tous les triangles précédemment stockés dans la mémoire partagée 16 ont été écrits dans le fichier "DXF", alors le module Raider 3D 17 passe à l'étape 58. A l'étape 58, le module Raider 3D 17 écrit les lignes de fin de section, à savoir les deux lignes :
0
ENDSEC

Puis les deux lignes indiquant la fin du fichier d'exportation au format DXF, à savoir :
0
EOF

Puis, toujours à l'étape 58, le module Raider 3D 17 ferme alors le fichier "DXF", qui aura donc alors la forme présentée dans la Table 3 ci-dessous :

**TABLE 3**

| |
|---|
| 0 |
| SECTION |
| 2 |
| ENTITIES |
| 0 |
| 3DFACE |
| 10 |
| 0.0 |
| 20 |
| 10.0 |
| 30 |
| 0.0 |
| 11 |
| 0.0 |
| 21 |
| 10.0 |
| 31 |
| -10.0 |
| 12 |
| 0.0 |
| 22 |
| 0.0 |
| 32 |
| 0.0 |
| 13 |
| 0.0 |
| 23 |
| 0.0 |
| 33 |
| 0.0 |
| 0 |
| 3DFACE |
| 10 |
| 0.0 |
| 20 |
| 10.0 |
| 30 |
| -10.0 |
| 11 |
| 0.0 |
| 21 |
| 0.0 |
| 31 |
| 0.0 |
| 12 |
| 0.0 |
| 22 |
| 0.0 |
| 32 |
| -10.0 |
| 13 |
| 0.0 |
| 23 |
| 0.0 |
| 33 |
| -10.0 |
| 0 |
| ENDSEC |
| 0 |
| EOF |

Le procédé d'exportation de données liées à des entités de type géométriques selon le second mode de réalisation de la présente invention est alors terminé, et ainsi qu'on vient de le voir, il aura permis d'exporter le modèle géométrique 10 créé et/ou manipulé par l'application graphique 11 sans aucune connaissance du format des données de cette application, sans aucune modification de cette application 11 et sans aucun développement de programme spécifique à cette application 11.

Bien évidemment, le procédé de l'invention ne se limite pas à l'interception et à l'exportation des fonctions graphiques de points et de triangles ci-dessus décrites. En particulier, dans l'exemple décrit précédemment, la fonction utilisée pour la génération des points a été la fonction g1Vertex3fv, mais il sera évident à toute personne compétente dans la technique que la description précédente s'applique avec des adaptations élémentaires à toute instruction du groupe glVertex.

De plus, il doit être parfaitement clair à partir de la description qui précède que le procédé de l'invention permet l'exportation de toute fonction OpenGL voulue, telle que, de façon non limitative, les fonctions définissant des éléments quadrangulaires, celles définissant des informations d'orientation de surface telles que la normale en point, celles définissant des informations de couleur, de texture de surface, de transparence, etc.

Par ailleurs, le procédé ne se limite pas à l'exportation de structures géométriques aussi simples que celles de l'exemple décrit, mais il sera évident pour l'homme de l'art que le procédé de l'invention permet exporter un modèle géométrique quelconque, du fait que toute structure modélisée, aussi complexe soit-elle, sera affichée à l'aide des primitives de points, de triangles, de quadrangles, etc., et pourra donc être exportée en utilisant le procédé décrit ci-dessus.

De même, pour d'évidentes raisons de simplicité de la description, il a été supposé que touts les structures géométriques utilisées, en particulier les points, étaient distinctes, et qu'en conséquence il n'y avait pas lieu de chercher à dédoublonner ou à optimiser de quelque façon que ce soit les tables employées. Dans la pratique, les éléments dupliqués seraient évidemment supprimés par un procédé approprié, soit lors de leur enregistrement dans les tables Points et Triangles par le programme de la DLL 15, soit lors de leur exportation dans l'unité de stockage 18 par le module Raider 3D 17.

Egalement, le procédé ne se limite pas aux modes de réalisation décrits utilisant la bibliothèque graphique OpenGL, et il sera évident pour toute personne compétente dans la technique que le procédé décrit ci-dessus est également applicable à toute autre bibliothèque de fonctions d'affichage 12 susceptible d'être utilisée par l'application de modélisation ou de modélisation géométrique 10, telle que, à titre d'exemple non limitatif, la bibliothèque d'affichage DirectX de Microsoft.

En outre, le procédé de l'invention peut n'être mis en oeuvre que pour une application particulière 11 désirée, plutôt que pour l'ensemble des application graphiques présentes sur le système de modélisation et/ou de manipulation 1, en installant la DLL 15 mettant en oeuvre le procédé de l'invention seulement dans le répertoire de l'application 11 voulue, plutôt que dans le répertoire système du système d'exploitation Windows.

D'après ce qui précède, on voit donc que le procédé de l'invention a permis d'exporter les informations de géométrie de l'exemple modélisé 10 par l'application 11, sans aucune modification de cette application 11, sans aucun développement de programme spécifique à cette application 11, et sans aucune connaissance du format de données utilisé par cette dernière, seulement en interceptant les fonctions et primitives graphiques que cette application 11 utilise pour l'affichage de ses modèles géométriques 10.

Compte-tenu de ce que le format de données utilisé pour stocker les données associées à des entités géométriques exportées dans l'unité de stockage 18 sera, soit un format connu et ouvert tel que celui présenté dans la premier mode de réalisation, soit un format standard du marché tel que le format DXF, soit encore tout autre format nécessité par une application particulière, il sera très aisé d'importer ces données dans tout autre système de modélisation ou de manipulation géométrique souhaité.

Le procédé de l'invention est donc par conséquent susceptible d'être appliqué dans une très grande variété de domaines, en particulier, dans tous les domaines où des données associées à des entités géométriques doivent échangées entre des systèmes différents, comme il s'en rencontre dans la totalité des industries et des services utilisant des données associées à des entités géométriques, tels que les industries et les services de la construction automobile ou aéronautique, du design industriel, du bâtiment et/ou de l'architecture, du jeu vidéo, etc..

## Revendications

1. Procédé d'exportation de données associées à des entités géométriques utilisant un système informatique (1) de modélisation et/ou de manipulation d'entités géométriques (10), ledit système informatique (1) de modélisation et/ou de manipulation d'entités géométriques (10) comportant au moins une unité centrale de traitement pouvant exécuter des programmes informatiques (11, 12, 15), une mémoire (16) pouvant stocker lesdits programmes informatiques (11, 12, 15) et des données associées à des entités géométriques (10) pendant la durée de l'exécution desdits programmes informatiques (11, 12, 15), et au moins une unité de stockage (18) pouvant stocker de façon permanente des données associées à des entités géométriques (10), ledit système informatique (1) comportant au moins un programme de modélisation et/ou de manipulation (11) d'entités géométriques (10) et au moins un programme d'affichage (12) de données associées à des entités géométriques (10), ledit au moins un programme de modélisation et/ou de manipulation (11) transmettant les données associées à des entités géométriques (10) à afficher au dit au moins un programme d'affichage (12) en appelant des fonctions d'affichage situées dans ledit au moins un programme d'affichage (12), lesdites données à afficher par ledit programme d'affichage (12) étant transmises par ledit au moins un programme de modélisation et/ou de manipulation (11) au dit au moins un programme d'affichage (12) sous la forme de paramètres d'appel desdites fonctions d'affichage appelées par ledit au moins un programme de modélisation et/ou de manipulation (11) d'entités géométriques (10), lesdites fonctions d'affichage permettant l'affichage d'un certain nombre de données associées à des entités géométriques (10), **caractérisé par le fait qu'**un programme d'exportation (15) de données associées à des entités géométriques (10) est substitué à au moins un desdits au moins un programme d'affichage (12), ledit programme d'exportation (15) présentant les mêmes fonctions d'affichage de données associées à des entités géométriques (10) que ledit au moins un programme d'affichage (12), lesdites fonctions d'affichage de données associées à des entités géométriques (10) dudit programme d'exportation (15) présentant les mêmes paramètres que les fonctions correspondantes dudit au moins un programme d'affichage (12), ledit au moins un programme de modélisation et/ou de manipulation (11) d'entités géométriques appelant de façon transparente les fonctions dudit programme d'exportation (15) au lieu des fonctions correspondantes dudit au moins un programme d'affichage (12).

2. Procédé selon la revendication 1, dans lequel un au moins desdits au moins un programmes de modélisation et/ou de manipulation (11) est un programme de type conception assistée par ordinateur ou CAO.

3. Procédé selon la revendication 1 ou 2, dans lequel un au moins desdits au moins un programmes de modélisation et/ou de manipulation (11) est un programme de type jeu vidéo.

4. Procédé selon l'une quelconque des revendications précédentes, dans lequel, lors d'un appel dudit au moins un programme de modélisation et/ou de manipulation (11) à l'une desdites fonctions d'affichages dudit programme d'exportation (15), ledit programme d'exportation (15) stocke sous un format approprié dans ladite au moins une unité de stockage (18) des données provenant d'un traitement par ledit programme d'exportation (15) des appels dudit au moins un programme de modélisation et/ou de manipulation (11) aux dites fonctions d'affichage dudit programme d'exportation (15).

5. Procédé selon l'une quelconque des revendications précédentes, dans lequel, lors d'un appel dudit au moins un programme de modélisation et/ou de manipulation (11) à l'une desdites fonctions d'affichages dudit programme d'exportation (15), ledit programme d'exportation (15) appelle la fonction d'affichage dudit programme d'affichage (12) correspondant à ladite fonction d'affichage appelée dans ledit programme d'exportation (15) avec les mêmes paramètres d'appel que ceux présents dans l'appel à ladite fonction dudit programme d'exportation (15).

6. Procédé selon la revendication 5, dans lequel ledit programme d'affichage appelé est ledit programme d'affichage (12) auquel ledit programme d'exportation a été substitué.

7. Procédé selon la revendication 5, dans lequel ledit programme d'affichage appelé est un programme d'affichage (12) différent de celui auquel ledit programme d'exportation a été substitué.

8. Procédé selon l'une quelconque des revendications précédentes, dans lequel ledit système informatique (1) comporte en outre au moins un dispositif d'affichage graphique (13), ledit au moins un dispositif d'affichage (13) comportant au moins une mémoire de rafraîchissement et/ou d'affichage, ledit au moins un programme d'affichage (12) commandant au dit au moins un dispositif d'affichage (13) la numérisation sous forme de points desdits appels de fonctions d'affichage reçus par ledit programme d'affichage (12), ledit dispositif d'affichage (13) stockant dans ladite mémoire de rafraîchissement et/ou d'affichage lesdits points provenant de ladite numérisation desdits appels de fonctions d'affichage reçus par ledit au moins un programme d'affichage (12).

9. Procédé selon la revendication 8, dans lequel ledit système informatique (1) comporte en outre au moins un écran graphique (14) et dans lequel ladite mémoire de rafraîchissement et/ou d'affichage est relue par ledit au moins un dispositif d'affichage (13), ledit au moins un dispositif d'affichage (13) affichant sur ledit au moins un écran graphique (14) lesdits points relus depuis ladite mémoire de rafraîchissement et/ou d'affichage.

10. Procédé selon la revendication 8 ou 9, dans lequel ladite exportation de données par ledit programme d'exportation (15) est déclenchée par au moins une instruction graphique particulière transmise par ledit au moins un programme de modélisation et/ou de manipulation (11) au dit programme d'exportation (15).

11. Procédé selon la revendication 10, dans lequel ladite au moins une instruction graphique particulière déclenchant ladite exportation de données est une instruction provoquant l'achèvement de ladite numérisation desdits appels de fonctions graphiques reçus en lesdits points dans ladite mémoire de rafraîchissement et/ou d'affichage.

12. Procédé selon la revendication 10 ou 11, dans lequel ledit au moins un dispositif d'affichage (13) comporte au moins deux mémoires de rafraîchissement et/ou d'affichage, et dans lequel ladite instruction provoquant ladite exportation est une instruction provoquant le basculement d'une desdites au moins deux mémoires de rafraîchissement et/ou d'affichage vers une autre desdites au moins deux mémoires de rafraîchissement et/ou d'affichage.

13. Procédé selon l'une quelconque des revendications précédentes, dans lequel lors d'un appel dudit programme de modélisation et/ou de manipulation (11) à l'une desdites fonctions d'affichages dudit programme d'exportation (15), ledit programme d'exportation (15) stocke dans ladite mémoire (16), sous un format approprié, des données provenant d'un traitement par ledit programme d'exportation (15) des appels aux dites fonctions d'affichage dudit programme d'exportation (15).

14. Procédé selon la revendication 13, dans lequel ledit système informatique (1) exécute en outre un programme utilitaire (17) relisant dans ladite mémoire (16) lesdites données provenant d'un traitement par ledit programme d'exportation (15).

15. Procédé selon la revendication 14, dans lequel ledit programme utilitaire (17) relisant ladite mémoire (16) stocke sous un format approprié dans ladite au moins une unité de stockage (18) lesdites données provenant d'un traitement par ledit programme d'exportation (15) relues depuis ladite mémoire (16).

16. Procédé selon l'une des revendications 14 ou 15, dans lequel ledit programme utilitaire (17) affiche lesdites données relues depuis ladite mémoire (16) à l'aide d'appels appropriés aux fonctions d'affichage dudit au moins un programme d'affichage (12).

17. Procédé selon l'une quelconque des revendications précédentes, dans lequel l'un desdits au moins un programmes d'affichage (12) auquel est substitué ledit programme d'exportation (15) est conforme à la spécification OpenGL de Silicon Graphics Inc.

18. Procédé selon la revendication 17, dans lequel ladite au moins une instruction provoquant ladite exportation est l'instruction OpenGL "wglSwapBuffers" et/ou l'instruction OpenGL "glFlush".

19. Procédé selon l'une quelconque des revendications 1 à 16, dans lequel l'un desdits au moins un programmes d'affichage (12) auquel est substitué ledit programme d'exportation (15) est conforme à la spécification DirectX de Microsoft.

20. Procédé selon l'une quelconque des revendications précédentes, dans lequel lesdites données associées à des entités géométriques comportent des données géométriques.

21. Procédé selon la revendication 20, dans lequel lesdites données géométriques sont de type bidimensionnel et/ou tridimensionnel.

22. Procédé selon l'une des revendications 20 ou 21, dans lequel lesdites données géométriques comportent des données de points, et/ou des données de segments à deux points, et/ou des données concernant des triangles, et/ou des données concernant des quadrangles, et/ou des données concernant des polygones.

23. Procédé selon l'une des revendications 20 à 22, dans lequel lesdites données géométriques sont associées à des entités géométriques de type filaire et/ou de type surfacique et/ou de type volumique.

24. Procédé selon la revendication 23, dans lequel lesdites données géométriques associées à des entités géométriques comportent en outre des données géométriques associées à au moins un vecteur normal à au moins une desdites entités de type filaire et/ou de type surfacique et/ou de type volumique.

25. Procédé selon l'une quelconque des revendications précédentes, dans lequel lesdites données associées à des entités géométriques comportent des données de couleur et/ou des données de texture.

26. Système d'exportation de données associées à des entités géométriques utilisant un système informatique (1) de modélisation et/ou de manipulation d'entités géométriques (10), ledit système informatique (1) de modélisation et/ou de manipulation d'entités géométriques (10) comportant au moins une unité centrale de traitement pouvant exécuter des programmes informatiques (11, 12, 15), une mémoire (16) pouvant stocker lesdits programmes informatiques (11, 12, 15) et des données associées à des entités géométriques (10) pendant la durée de l'exécution desdits programmes informatiques (11, 12, 15), et au moins une unité de stockage (18) pouvant stocker de façon permanente des données associées à des entités géométriques (10), ledit système informatique (1) comportant au moins un programme de modélisation et/ou de manipulation (11) d'entités géométriques (10) et au moins un programme d'affichage (12) de données associées à des entités géométriques (10), ledit au moins un programme de modélisation et/ou de manipulation (11) transmettant les données associées à des entités géométriques (10) à afficher au dit au moins un programme d'affichage (12) en appelant des fonctions d'affichage situées dans ledit au moins un programme d'affichage (12), lesdites données à afficher par ledit programme d'affichage (12) étant transmises par ledit au moins un programme de modélisation et/ou de manipulation (11) au dit au moins un programme d'affichage (12) sous la forme de paramètres d'appel desdites fonctions d'affichage appelées par ledit au moins un programme de modélisation et/ou de manipulation (11) d'entités géométriques (10), lesdites fonctions d'affichage permettant l'affichage d'un certain nombre de données associées à des entités géométriques (10), **caractérisé par le fait qu'**il met en oeuvre le procédé selon l'une quelconque des revendications précédentes.

## Claims

1. Process for exporting data associated with geometric entities using a computer system (1) for modeling and/or manipulation of geometric entities (10), said computer system (1) for modeling and/or manipulation of geometric entities (10) comprising at least one central processing unit that can execute computer programs (11, 12, 15), a memory (16) that can store said computer programs (11, 12, 15) and data associated with geometric entities (10) for the duration of the execution of said computer programs (11, 12, 15), and at least one storage unit (18) that can store permanently data associated with said geometric entities (10), said computer system (1) comprising at least one program for modeling and/or manipulation (11) of geometric entities (10) and at least one display program (12) for data associated with geometric entities (10), said at least one program for modeling and/or manipulation (11) transmitting data associated with geometric entities (10) to be displayed to said at least one display program (12) by calling display functions located in said at least one display program (12), said data to be displayed by said display program (12) being transmitted by said at least one modeling and/or manipulation program (11) to said at least one display program (12) in the form of call parameters of said display functions called by said at least one program for modeling and/or manipulation (11) of geometric entities (10), said display functions permitting the display of a certain number of data associated with geometric entities (10), **characterized by** the fact that an exportation program (15) of data associated with said geometric entities (10) is substituted for at least one of said at least one display programs (12), said exportation program (15) having the same display functions of data associated with geometric entities (10) as said at least one display program (12), said display functions of data associated with geometric entities (10) of said exportation program (15) having the same parameters as the corresponding functions of said at least one display program (12), said at least one program for modeling and/or manipulation (11) of geometric entities calling in a transparent fashion the functions of said exportation program (15) instead of corresponding functions of said at least one display program (12).

2. Process according to claim 1, in which at least one of said at least one modeling and/or manipulation programs (11) is a program of the computer assisted design type or CAD.

3. Process according to claim 1 or 2, in which at least one of said at least one modeling and/or manipulation programs (11) is a program of the video game type.

4. Process according to any one of the preceding claims, in which, during a call of said at least one modeling and/or manipulation program (11) at one of said display functions of said exportation program (15), said exportation program (15) stores in a suitable format in said at least one storage unit (18) data from a processing by said exportation program (15) of the calls of said at least one modeling and/or manipulation program (11) to said display functions of said exportation program (15).

5. Process according to any one of the preceding claims, in which, during a call of said at least one modeling and/or manipulation program (11) to one of said display functions of said exportation program (15), said exportation program (15) calls the display function of said display program (12) corresponding to said display function called in said exportation program (15) with the same call parameters as those present in the call of said function of said exportation program (15).

6. Process according to claim 5, in which said called display program is said display program (12) for which said exportation program has been substituted.

7. Process according to claim 5, in which said called display program is a display program (12) different from that for which said exportation program has been substituted.

8. Process according to any one of the preceding claims, in which said computer system (1) comprises moreover at least one graphical display device (13), said at least one display device (13) comprising at least one refreshing and/or display memory, said at least one display program (12) commanding to said at least one display device (13) the digitization in the form of points of said calls of display functions received by said display program (12), said display device (13) storing in said refreshing and/or display memory the points from said digitization of said calls of display functions received by said at least one display program (12).

9. Process according to claim 8, in which said computer system (1) comprises moreover at least one graphical screen (14) and in which said refreshing and/or display memory is reread by said at least one display device (13), said at least one display device (13) displaying on said at least one graphical screen (14) said points reread from said refreshing and/or display memory.

10. Process according to claim 8 or 9, in which said exportation of data by said exportation program (15) is triggered by at least one particular graphical instruction transmitted by said at least one modeling and/or manipulation program (11) to said exportation program (15).

11. Process according to claim 10, in which said at least one particular graphical instruction triggering said exportation of data is an instruction giving rise to the completion of said digitization of said graphical call functions received in said points in said refreshing and/or display memory.

12. Process according to claim 10 or 11, in which said at least one display device (13) comprises at least two refreshing and/or display memories, and in which said instruction giving rise to said exportation is an instruction giving rise to the switching of one of said at least one refreshing and/or display memories toward another of said at least two refreshing and/or display memories.

13. Process according to any one of the preceding claims, in which during a call of said modeling and/or manipulation program (11) to one of said display functions of said exportation program (15), said exportation program (15) stores in said memory (16), in an appropriate format, data from a processing by said exportation program (15) of said calls to said display functions of said exportation program (15).

14. Process according to claim 13, in which said computer system (1) moreover executes a utility program (17) rereading in said memory (16) said data from a processing by said exportation program (15).

15. Process according to claim 14, in which said utility program (17) rereading said memory (16) stores in a suitable format in said at least one storage unit (18) said data from a processing by said exportation program (15) reread from said memory (16).

16. Process according to one of claim 14 or 15, in which said utility program (17) displays said data reread from said memory (16) with the help of suitable calls to the display functions of said at least one display program (12).

17. Process according to any one of the preceding claims, in which one of said at least one display programs (12) for which is substituted said exportation program (15) is according to the OpenGL specification of Silicon Graphics Inc.

18. Process according to claim 17, in which said at least one instruction giving rise to said exportation is the OpenGL instruction "wglSwapBuffers" and/or the OpenGL instruction "glFlush".

19. Process according to any one of claims 1 to 16, in which one of said at least one display programs (12) which is replaced by said exportation program (15) is according to the DirectX specification of Microsoft.

20. Process according to any one of the preceding claims, in which said data associated with said geometric entities comprise geometric data.

21. Process according to claim 20, in which said geometric data are of the bi-dimensional and/or tri-dimensional type.

22. Process according to one of claims 20 or 21, in which said geometric data comprise data as to points, and/or data of segments with two points, and/or data concerning triangles, and/or data concerning quandrangles, and/or data concerning polygons.

23. Process according to one of claims 20 to 22, in which said geometric data are associated with geometric entities of the line type and/or of the surface type and/or of the volumetric type.

24. Process according to claim 23, in which said geometric data associated with geometric entities comprise moreover geometric data associated with at least one vector normal to at least one of said entities of the line type and/or of the surface type and/or of the volume type.

25. Process according to any one of the preceding claims, in which said data associated with geometric entities comprise data as to color and/or data as to texture.

26. System for the exportation of data associated with geometric entities using a computer system (1) for modeling and/or manipulation of geometric entities (10), said computer system (1) for modeling and/or manipulation of geometric entities (10) comprising at least one central processing unit that can carry out computer programs (11, 12, 15), a memory (16) that can store said computer programs (11, 12, 15) and data associated with geometric entities (10) for the duration of the execution of said computer programs (11, 12, 15), and at least one storage unit (18) that can store permanently data associated with geometric entities (10), said computer system (1) comprising at least one program for modeling and/or manipulation (11) of geometric entities (10) and at least one display program (12) for data associated with said geometric entities (10), said at least one program for modeling and/or manipulation (11) transmitting data associated with said geometric entities (10) to be displayed to said at least one display program (12) by calling the display functions located in said at least one display program (12), said data to be displayed by said display program (12) being transmitted by said at least one program for modeling and/or manipulation (11) to said at least one display program (12) in the form of call parameters of said display functions called by said at least one modeling and/or manipulation program (11) for geometric entities (10), said display functions permitting the display of a certain number of data associated with geometric entities (10), **characterized by** the fact that it uses the process according to any one of the preceding claims.

## Patentansprüche

1. Verfahren zum Ausgeben von mit geometrischen Entitäten in Zusammenhang stehenden Daten unter Verwendung eines Datenverarbeitungssystems (1) zur Modellierung und/oder Manipulation von geometrischen Entitäten (10), wobei das Datenverarbeitungssystem (1) zur Modellierung und/oder Manipulation von geometrischen Entitäten (10) zumindest eine Zentralverarbeitungseinheit, die zum Ausführen von Datenverarbeitungsprogrammen (11, 12, 15) fähig ist, einen Speicher (16), der zum Speichern der Datenverarbeitungsprogramme (11, 12, 15) und von mit geometrischen Entitäten (10) in Zusammenhang stehenden Daten während der Dauer der Ausführung der Datenverarbeitungsprogramme (11, 12, 15) fähig ist, und zumindest eine Speichereinheit (18) aufweist, die zum Speichern von mit geometrischen Entitäten (10) in Zusammenhang stehenden Daten auf dauerhafte Art und Weise fähig ist, wobei das Datenverarbeitungssystem (1) zumindest ein Programm (11) zur Modellierung und/oder Manipulation von geometrischen Entitäten (10) und zumindest ein Programm (12) zur Darstellung von mit geometrischen Entitäten (10) in Zusammenhang stehenden Daten aufweist, wobei das zumindest eine Programm (11) zur Modellierung und/oder Manipulation die mit geometrischen Entitäten (10) in Zusammenhang stehenden Daten zur Darstellung unter Aufrufung von sich in dem zumindest einen Programm (12) zur Darstellung befindlichen Darstellungsfunktionen an das zumindest eine Programm (12) zur Darstellung überträgt, wobei die durch das Programm (12) zur Darstellung darzustellenden Daten von dem zumindest einen Programm (11) zur Modellierung und/oder Manipulation an das zumindest eine Programm (12) zur Darstellung in der Form von Aufrufparametern der Darstellungsfunktionen übertragen werden, die von dem zumindest einen Programm (11) zur Modellierung und/oder Manipulation von geometrischen Entitäten (10) aufgerufen werden, wobei die Darstellungsfunktionen die Darstellung einer bestimmten Menge von mit geometrischen Entitäten (10) in Zusammenhang stehenden Daten ermöglichen, **dadurch gekennzeichnet, dass** ein Programm (15) zur Ausgabe von mit geometrischen Entitäten (10) in Zusammenhang stehenden Daten durch zumindest eines des zumindest einen Programms (12) zur Darstellung ersetzt wird, wobei das Programm (15) zur Ausgabe die gleichen Darstellungsfunktionen von mit geometrischen Entitäten (10) in Zusammenhang stehenden Daten aufweist wie das zumindest eine Programm (12) zur Darstellung, wobei die Darstellungsfunktionen von mit geometrischen Entitäten (10) in Zusammenhang stehenden Daten des Programms (15) zur Ausgabe die gleichen Parameter aufweisen wie die entsprechenden Funktionen des zumindest einen Programms (12) zur Darstellung, wobei das zumindest eine Programm (11) zur Modellierung und/oder Manipulation von geometrischen Entitäten anstatt entsprechender Funktionen des zumindest einen Programms (12) zur Darstellung auf eine transparente Art und Weise die Funktionen des Programms (15) zur Ausgabe aufruft.

2. Verfahren gemäß Anspruch 1, bei dem zumindest eines des zumindest einen Programms (11) zur Modellierung und/oder Manipulation ein Programm vom Typ computerunterstützter Entwurf oder CAO ist.

3. Verfahren gemäß Anspruch 1 oder 2, bei dem zumindest eines des zumindest einen Programms (11) zur Modellierung und/oder Manipulation ein Programm vom Typ Videospiel ist.

4. Verfahren gemäß einem der vorhergehenden Ansprüche, bei dem das Programm (15) zur Ausgabe bei einem Aufruf einer der Darstellungsfunktionen des Programms (15) zur Ausgabe durch das zumindest eine Programm (11) zur Modellierung und/oder Manipulation Daten in einem geeigneten Format in die zumindest eine Speichereinheit (18) speichert, die bei einer durch das Programm (15) zur Ausgabe durchgeführten Verarbeitung von Aufrufen der Darstellungsfunktionen des Programms (15) zur Ausgabe durch das zumindest eine Programm (11) zur Modellierung und/oder Manipulation entstehen.

5. Verfahren gemäß einem der vorhergehenden Ansprüche, bei dem das Programm (15) zur Ausgabe bei einem Aufruf von einer der Darstellungsfunktionen des Programms (15) zur Ausgabe durch das zumindest eine Programm (11) zur Modellierung und/oder Manipulation die Darstellungsfunktion des Programms (12) zur Darstellung aufruft, die der Darstellungsfunktion entspricht, die im Programm (15) zur Ausgabe mit den gleichen Aufrufparametern aufgerufen wird, die beim Aufruf der Funktion des Programms (15) zur Ausgabe vorliegen.

6. Verfahren gemäß Anspruch 5, bei dem das aufgerufene Programm zur Darstellung das Programm (12) zur Darstellung ist, durch das das Programm zur Ausgabe ersetzt wurde.

7. Verfahren gemäß Anspruch 5, bei dem das aufgerufene Programm zur Darstellung ein Programm (12) zur Darstellung ist, das sich von demjenigen unterscheidet, durch das das Programm zur Ausgabe ersetzt wurde.

8. Verfahren gemäß einem der vorhergehenden Ansprüche, bei dem das Datenverarbeitungssystem (1) zusätzlich zumindest eine Vorrichtung (13) zur grafischen Darstellung aufweist, wobei die zumindest eine Vorrichtung (13) zur Darstellung zumindest einen Auffrischungs- und/oder Darstellungsspeicher aufweist, wobei das zumindest eine Programm (12) zur Darstellung der zumindest einen Vorrichtung (13) zur Darstellung die punktförmige Digitalisierung der Darstellungsfunktionsaufrufe anordnet, die von dem Programm (12) zur Darstellung empfangen werden, wobei die Vorrichtung (13) zur Darstellung die Punkte in dem Auffrischungs- und/oder Darstellungsspeicher speichert, die bei der Digitalisierung der Darstellungsfunktionsaufrufe entstehen, die von dem zumindest einen Programm (12) zur Darstellung empfangen werden.

9. Verfahren gemäß Anspruch 8, bei dem das Datenverarbeitungssystem (1) zusätzlich zumindest einen Grafikbildschirm (14) aufweist, und bei dem der Auffrischungs- und/oder Darstellungsspeicher von der zumindest einen Vorrichtung (13) zur Darstellung erneut ausgelesen wird, wobei die zumindest eine Vorrichtung (13) zur Darstellung auf dem zumindest einen Grafikbildschirm (14) die Punkte darstellt, die erneut aus dem Auffrischungs- und/oder Darstellungsspeicher ausgelesen werden.

10. Verfahren gemäß Anspruch 8 oder 9, bei dem die Ausgabe von Daten durch das Programm (15) zur Ausgabe durch zumindest eine bestimmte Grafikanweisung ausgelöst wird, die von dem zumindest einen Programm (11) zur Modellierung und/oder Manipulation an das Programm (15) zur Ausgabe übertragen wird.

11. Verfahren gemäß Anspruch 10, bei dem die zumindest eine bestimmte, die Ausgabe von Daten auslösende Grafikanweisung eine Anweisung ist, die die Beendigung der Digitalisierung der Grafikfunktionsaufrufe bewirkt, die an den Punkten im Auffrischungs- und/oder Darstellungsspeicher empfangen werden.

12. Verfahren gemäß Anspruch 10 oder 11, bei dem die zumindest eine Vorrichtung (13) zur Darstellung zumindest zwei Auffrischungs- und/oder Darstellungsspeicher aufweist, und bei dem die die Ausgabe bewirkende Anweisung eine Anweisung ist, die die Umlegung von einem der zumindest zwei Auffrischungs- und/oder Darstellungsspeicher auf einen anderen der zumindest zwei Auffrischungs- und/oder Darstellungsspeicher bewirkt.

13. Verfahren gemäß einem der vorhergehenden Ansprüche, bei dem das Programm (15) zur Ausgabe bei einem Aufruf einer der Darstellungsfunktionen des Programms (15) zur Ausgabe durch das Programm (11) zur Modellierung und/oder Manipulation Daten in einem geeigneten Format in den Speicher (16) speichert, die bei einer durch das Programm (15) zur Ausgabe durchgeführten Verarbeitung von Aufrufen der Darstellungsfunktionen des Programms (15) zur Ausgabe entstehen.

14. Verfahren gemäß Anspruch 13, bei dem das Datenverarbeitungssystem (1) zusätzlich ein Anwendungsprogramm (17) ausführt, das die Daten, die durch eine Verarbeitung durch das Programm (15) zur Ausgabe entstehen, erneut im Speicher (16) ausliest.

15. Verfahren gemäß Anspruch 14, bei dem das Anwendungsprogramm (17), das den Speicher (16) erneut ausliest, in der zumindest einen Speichereinheit (18) die Daten in einem geeigneten Format speichert, die durch eine Verarbeitung durch das Programm (15) zur Ausgabe entstehen, und die erneut aus dem Speicher (16) ausgelesen werden.

16. Verfahren gemäß einem der Ansprüche 14 oder 15, bei dem das Anwendungsprogramm (17) die erneut aus dem Speicher (16) ausgelesenen Daten mit Hilfe geeigneter Aufrufe der Darstellungsfunktionen des zumindest einen Programms (12) zur Darstellung darstellt.

17. Verfahren gemäß einem der vorhergehenden Ansprüche, bei dem eines des zumindest einen Programms (12) zur Darstellung, durch das das Programm (15) zur Ausgabe ersetzt wird, der Spezifikation OpenGL von Silicon Graphics Inc. entspricht.

18. Verfahren gemäß Anspruch 17, bei dem die zumindest eine die Ausgabe bewirkende Anweisung die OpenGL-Anweisung "wglSwapBuffers" und/oder die OpenGL-Anweisung "glFlush" ist.

19. Verfahren gemäß einem der Ansprüche 1 bis 16, bei dem eines des zumindest einen Programms (12) zur Darstellung, durch das das Programm (15) zur Ausgabe ersetzt wird, konform zur Spezifikation DirectX von Microsoft entspricht.

20. Verfahren gemäß einem der vorhergehenden Ansprüche, bei dem die mit geometrischen Entitäten in Zusammenhang stehenden Daten geometrische Daten aufweisen.

21. Verfahren gemäß Anspruch 20, bei dem die geometrischen Daten vom zweidimensionalen und/oder dreidimensionalen Typ sind.

22. Verfahren gemäß einem der Ansprüche 20 oder 21, bei dem die geometrischen Daten Punktdaten und/oder Segmentdaten mit zwei Punkten und/oder Daten in Bezug auf Dreiecke und/oder Daten in Bezug auf Vierecke und/oder Daten in Bezug auf Vielecke aufweisen.

23. Verfahren gemäß einem der Ansprüche 20 bis 22, bei dem die geometrischen Daten mit geometrische Entitäten vom linienförmigen Typ und/oder vom flächigen Typ und/oder vom räumlichen Typ in Zusammenhang stehen.

24. Verfahren gemäß Anspruch 23, bei dem die mit geometrischen Entitäten in Zusammenhang stehenden geometrischen Daten zusätzlich geometrische Daten aufweisen, die zumindest mit einem Normalvektor auf zumindest eine der Entitäten vom linienförmigen Typ und/oder vom flächigen Typ und/oder vom räumlichen Typ in Zusammenhang stehen.

25. Verfahren gemäß einem der vorhergehenden Ansprüche, bei dem die mit geometrischen Entitäten in Zusammenhang stehenden Daten Farbdaten und/oder Strukturdaten aufweisen.

26. System zur Ausgabe von mit geometrischen Entitäten in Zusammenhang stehenden Daten unter Verwendung eines Datenverarbeitungssystems (1) zur Modellierung und/oder Manipulation von geometrischen Entitäten (10), wobei das Datenverarbeitungssystem (1) zur Modellierung und/oder Manipulation von geometrischen Entitäten (10) zumindest eine Zentralverarbeitungseinheit, die zum Ausführen von Datenverarbeitungsprogrammen (11, 12, 15) fähig ist, einen Speicher (16), der zum Speichern der Datenverarbeitungsprogramme (11, 12, 15) und von mit geometrischen Entitäten (10) in Zusammenhang stehenden Daten während der Dauer der Ausführung der Datenverarbeitungsprogramme (11, 12, 15) fähig ist, und zumindest eine Speichereinheit (18) aufweist, die zum Speichern von mit geometrischen Entitäten (10) in Zusammenhang stehenden Daten auf dauerhafte Art und Weise fähig ist, wobei das Datenverarbeitungssystem (1) zumindest ein Programm (11) zur Modellierung und/oder Manipulation von geometrischen Entitäten (10) und zumindest ein Programm (12) zur Darstellung von mit geometrischen Entitäten (10) in Zusammenhang stehenden Daten aufweist, wobei das zumindest eine Programm (11) zur Modellierung und/oder Manipulation die mit geometrischen Entitäten (10) in Zusammenhang stehenden Daten zur Darstellung unter Aufrufung von sich in dem zumindest einen Programm (12) zur Darstellung befindlichen Darstellungsfunktionen an das zumindest eine Programm (12) zur Darstellung überträgt, wobei die durch das Programm (12) zur Darstellung darzustellenden Daten von dem zumindest einen Programm (11) zur Modellierung und/oder Manipulation an das zumindest eine Programm (12) zur Darstellung in der Form von Aufrufparametern der Darstellungsfunktionen übertragen werden, die von dem zumindest einen Programm (11) zur Modellierung und/oder Manipulation von geometrischen Entitäten (10) aufgerufen werden, wobei die Darstellungsfunktionen die Darstellung einer bestimmten Menge von mit geometrischen Entitäten (10) in Zusammenhang stehenden Daten ermöglichen, **dadurch gekennzeichnet, dass** das System das Verfahren gemäß einem der vorhergehenden Ansprüche einsetzt.
